# FASCICULE DE BREVET EUROPEEN

(11) **EP 2 117 858 B1**
(45) Date de publication et mention de la délivrance du brevet: **12.01.2011**
(21) Numéro de dépôt: 08762078.7
(22) Date de dépôt: 13.02.2008
(51) Int. Cl.: B60H 1/28, B62D 25/08, B60R 19/52

(54) **Dispositif de grille d'auvent de véhicule automobile**
Aussengittervorrichtung für Automobile
External grid device for automotive vehicle

(30) Priorité: 15.02.2007 FR 0753274
(43) Date de publication de la demande: 18.11.2009
(73) Titulaire: Renault SAS, 92100 Boulogne Billancourt (FR)
(72) Inventeur: BARCELO, Franck, F-78610 Le Perray En Yvelines (FR); BETTRAY, Guy, F-78280 Guyancourt (FR)
(86) Numéro de dépôt international: PCT/FR2008/050228
(87) Numéro de publication internationale: WO 2008/104706

(56) Documents cités:
- EP-A- 1 637 372
- DE-A1- 19 822 197
- DE-C1- 4 322 951
- FR-A1- 2 670 717
- FR-A1- 2 772 670
- US-A- 3 285 321
- US-A- 5 681 075
- US-A- 5 887 672
- US-B1- 6 224 143

## Description

L'invention concerne un dispositif de grille extérieure de véhicule automobile.

Sur un véhicule automobile, les grilles extérieures, telles que par exemple les grilles d'auvent, plus particulièrement, ont le désavantage de laisser passer des éléments extérieurs tels que des feuilles par exemple. Cela risque alors de boucher les grilles, ce qui peut par conséquent limiter leur qualités intrinsèques, mais risque aussi de salir, voire de détériorer, les zones situées en arrière des grilles.

Dans le cas d'une grille d'auvent, il est possible d'utiliser une grille supplémentaire en acier inoxydable pouvant être agencée sous la première grille.

Cependant, ce type de grille supplémentaire présente de nombreux inconvénients, en particulier un coût et un poids élevés ainsi qu'un encombrement en épaisseur important. Un type de dispositif de grille d'auvent avec les charactéristiques techniques du préambule de la revendication 1 est décrit dans le document US 6224143B1.

Afin de pallier ces inconvénients, l'invention a pour objet un dispositif de grille extérieure de véhicule automobile de fabrication simple et peu onéreuse.

L'invention a aussi pour objet un dispositif de grille extérieure de véhicule automobile dont le poids et l'encombrement sont peu importants.

A cet effet, l'invention propose un dispositif de grille extérieure de véhicule automobile du type cité ci-dessus, avec un tamis en plastique souple, dont le maillage est plus fin que celui de la grille, disposé le long d'une face interne de ladite grille caractérisé en ce que la face interne de la grille comporte un réseau de nervures formant une zone de fixation entre ladite grillle et le tamis.

Selon d'autres caractéristiques de l'invention:
- Le tamis est fixé sur la grille par soudage.
- Les dimensions du maillage du tamis se situent entre 2 et 7 millimètres.
- Le tamis est en polypropylène.
- La grille extérieure est une grille d'auvent disposée entre un capot et un pare-brise du véhicule, le tamis se trouvant entre la grille et une boîte à eau située sous ladite grille.
- La grille extérieure est une grille de prise d'air frontale.
- La grille extérieure est une grille de prise latérale

D'autres caractéristiques et avantages de l'invention apparaîtront à la lecture de la description d'exemples de réalisation d'un dispositif de grille de véhicule automobile en référence aux dessins annexés dans lesquels :
- La figure 1 est une vue en perspective d'un véhicule comportant un dispositif de grille selon l'invention.
- La figure 2 est une vue de dessus d'un détail de la grille seule.
- La figure 3 est une vue de dessous du détail de la figure 2.
- La figure 4 est une vue schématique en coupe selon la direction IV-IV de la figure 3 du dispositif de grille complet.

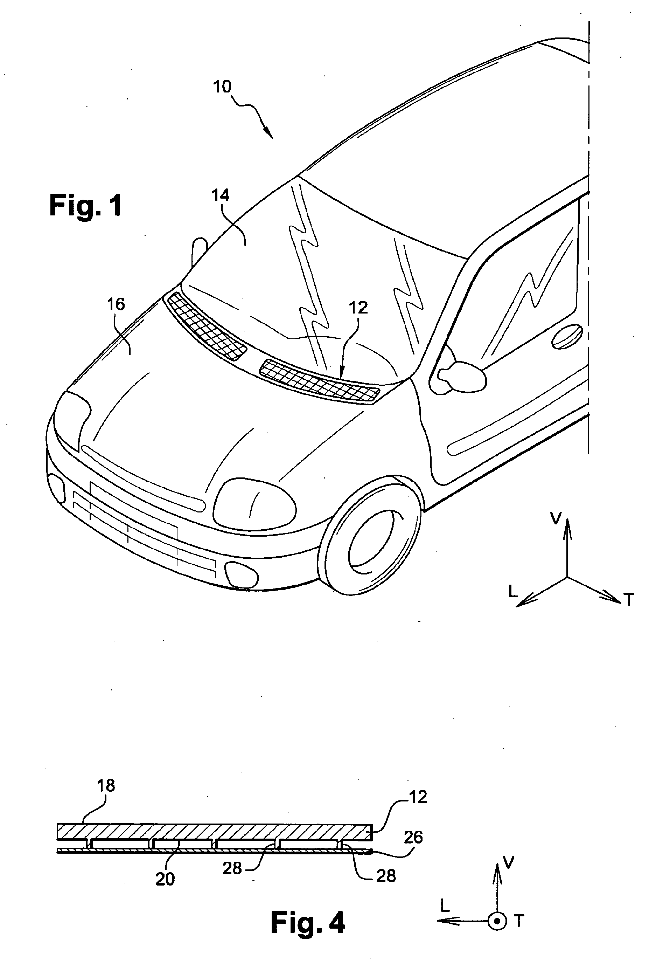

Dans la description qui suit, nous prendrons à titre non limitatif une orientation longitudinale, verticale et transversale indiquée par le trièdre L,V,T des figures 1 à 4.

Tel que représenté à la figure 1, un véhicule 10 comporte une grille extérieure 12.

Dans l'exemple décrit ici, la grille 12 est une pièce plastique s'étendant selon une direction transversale entre un pare-brise 14 et un capot 16 du véhicule 10 et recouvrant une boîte à eau (non représentée) dudit véhicule 10. Ce type de grille est communément appelé « grille d'auvent » et est destiné à permettre l'entrée d'air à l'intérieur du véhicule.

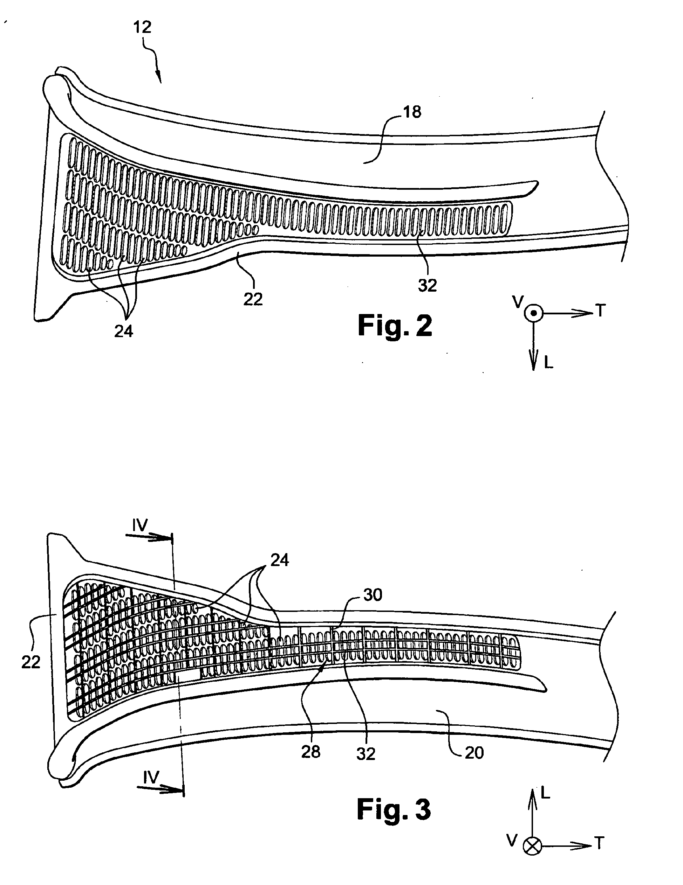

Tel que représenté à la figure 2, la grille 12 comporte une face externe 18, tournée vers l'extérieur du véhicule 10 et une face interne 20 tournée vers l'intérieur du véhicule 10.

La grille 12 comporte un pourtour 22 destiné à être fixé sur des éléments (non représentés) du véhicule 10, par vissage ou clippage par exemple.

La grille 12 présente un maillage formé de trous oblongs 24 d'orientation sensiblement longitudinale et alignés les uns par rapport aux autres. Les trous oblongs 24 présentent par exemple une taille de 5 millimètres par 20 millimètres. La taille des trous 24 dépend de l'aspect souhaité pour la grille mais aussi des contraintes liées au débit d'air souhaité pour ventiler l'habitacle.

Tel que représenté à la figure 4 la grille 12 est également munie d'un tamis 26 (pour des raisons de clarté des figures, le tamis 26 n'a pas été représenté aux figures 2 et 3).

Le tamis 26 est une pièce en matière plastique souple de type polypropylène. Le tamis 26 est découpé à forme de la grille 12 et destiné à être fixé sur la face interne 20 de ladite grille 12.

La face interne 20 de la grille 12 comporte un réseau de nervures 28 formant des zones de fixation du tamis 26. Lesdites nervures 28 sont disposées dans le cas décrit ici selon un quadrillage formé de lignes sensiblement longitudinales 30 et de lignes sensiblement transversales 32. Les lignes longitudinales 30 sont disposées entre deux rangées de trous oblongs 24 tandis que les lignes transversales 32 traversent les trous oblongs et sont visibles à travers la grille 12 depuis l'extérieur du véhicule.

Cependant, le positionnement des nervures 28 sur la face interne 20 de la grille 12 pourrait être différent car il dépend de la configuration de la grille 12, et en particulier de la forme des trous 24, les nervures 28 servant aussi à la rigidification des zones ouvertes.

Le tamis 26 peut ainsi être monté par soudage sur les nervures 28.

Selon une variante de l'invention, le tamis 26 peut aussi être monté par agrafage sur la grille 12.

Le tamis 26 comporte un maillage plus fin que celui de la grille 12, de l'ordre, par exemple de 5 à 7 millimètres ce qui empêche le passage d'éléments extérieurs à travers ladite grille 12, tout en permettant une entrée d'air suffisante et correcte. Ainsi le passage d'air à travers le tamis 26 ne doit pas être plus faible qu'à travers la grille 12. Plus particulièrement, la dimension du maillage du tamis 26 peut être choisie en fonction des éléments ne devant pas pénétrer à travers la grille. Par exemple un maillage de 2 millimètres par 2 millimètres empêche le passage de moustiques.

Le tamis 26 peut aussi subir un traitement de surface permettant d'augmenter ses qualités de résistance aux intempéries, aux rayons U.V. et au vieillissement.

Selon un premier avantage de l'invention, la fabrication du matériau constituant le tamis 26 est simple et peu onéreuse.

D'autre part, le matériau mis en forme constituant le tamis 26 étant livré sous forme de rouleaux, le dispositif de grille selon l'invention présente l'avantage de réduire les coûts de fabrication en diminuant l'espace de stockage nécessaire.

Par ailleurs, la découpe du tamis 26 à la forme de la grille 12 est simple et peu coûteuse, et le stockage des tamis 26 découpés est également peu encombrant. Tout ceci permet aussi de réduire à la fois les coûts de fabrication et de logistique.

Le dispositif de grille selon l'invention présente de plus l'avantage de pouvoir être facilement transversalisé à toute une gamme de véhicules, car il est facilement adaptable à des véhicules de type différent, sans modification importante des outillages.

Le dispositif de grille selon l'invention est également léger et présente un faible encombrement en épaisseur. En outre, l'utilisation d'un tamis en matière plastique de ce type permet d'améliorer l'écoulement de l'air à travers la grille 12 par rapport à l'utilisation d'un tamis en acier inoxydable.

Dans le cas décrit, ici la grille 12 est une grille d'auvent mais il pourrait s'agir d'un autre type de grille extérieure du véhicule comme par exemple : une prise d'air frontale (grille centrale), une prise d'air latérale, une prise d'air arrière en partie basse.

## Revendications

1. Dispositif de grille d'auvent (12) de véhicule automobile (10), dans lequel un tamis (26) en plastique souple, dont le maillage est plus fin que celui de la grille (12), est disposé le long d'une face interne (20) de ladite grille (12), **caractérisé en ce que** la face interne (18) de la grille (12) comporte un réseau de nervures (28) formant une zone de fixation entre ladite grille (12) et le tamis (26).

2. Dispositif de grille d'auvent (12) selon la revendication 1, **caractérisé en ce que** le tamis (26) est fixé sur la grille (12) par soudage.

3. Dispositif de grille d'auvent (12) selon l'une quelconque des revendications précédentes, **caractérisé en ce que** le tamis (26) est fixé sur la grille (12) par agrafage.

4. Dispositif de grille d'auvent (12) selon l'une quelconque des revendications précédentes, **caractérisé en ce que** les dimensions du maillage du tamis (26) se situent entre 2 et 7 millimètres.

5. Dispositif de grille d'auvent (12) selon l'une quelconque des revendications précédentes, **caractérisé en ce que** le tamis (26) est en polypropylène.

6. Dispositif de grille d'auvent (12) selon l'une quelconque des revendications précédentes, **caractérisé en ce que** la grille (12) est en plastique

## Claims

1. Scuttle grille (12) device for an automotive vehicle (10), in which a flexible plastic screen (26) whose holes are smaller than those of the grille (12) is placed adjacent to an inside face (20) of said grille (12), **characterized in that** the inside face (18) of the grille (12) has a network of ribs (28) forming a region for attaching together said grille (12) and the screen (26).

2. Scuttle grille (12) device according to Claim 1, **characterized in that** the screen (26) is attached to the grille (12) by welding.

3. Scuttle grille (12) device according to either of the preceding claims, **characterized in that** the screen (26) is attached to the grille (12) by clips.

4. Scuttle grille (12) device according to any one of the preceding claims, **characterized in that** the dimensions of the holes in the screen (26) are between 2 and 7 millimeters.

5. Scuttle grille (12) device according to any one of the preceding claims, **characterized in that** the screen (26) is made of polypropylene.

6. Scuttle grille (12) device according to any one of the preceding claims, **characterized in that** the grille (12) is made of plastic.

## Patentansprüche

1. Windlaufgittervorrichtung (12) eines Kraftfahrzeugs (10), wobei ein Sieb (26) aus weichem Kunststoff, dessen Netzwerk feiner als das des Gitters (12) ist, entlang einer Innenfläche (20) des Gitters (12) angeordnet ist, **dadurch gekennzeichnet, dass** die Innenfläche (18) des Gitters (12) ein Rippennetz (28) umfasst, das eine Befestigungszone zwischen dem Gitter (12) und dem Sieb (26) bildet.

2. Windlaufgittervorrichtung (12) nach Anspruch 1, **dadurch gekennzeichnet, dass** das Sieb (26) durch Schweißen am Gitter (12) befestigt ist.

3. Windlaufgittervorrichtung (12) nach einem der vorhergehenden Ansprüche, **dadurch gekennzeichnet, dass** das Sieb (26) durch Zusammenheften am Gitter (12) befestigt ist.

4. Windlaufgittervorrichtung (12) nach einem der vorhergehenden Ansprüche, **dadurch gekennzeichnet, dass** die Abmessungen des Netzwerks des Siebs (26) zwischen 2 und 7 Millimetern liegen.

5. Windlaufgittervorrichtung (12) nach einem der vorhergehenden Ansprüche, **dadurch gekennzeichnet, dass** das Sieb (26) aus Polypropylen ist.

6. Windlaufgittervorrichtung (12) nach einem der vorhergehenden Ansprüche, **dadurch gekennzeichnet, dass** das Gitter (12) aus Kunststoff ist.
